# EUROPEAN PATENT APPLICATION

(11) **EP 3 043 444 A1**
(43) Date of publication of application: **13.07.2016**
(21) Application number: 16150833.8
(22) Date of filing: 12.01.2016
(51) Int. Cl.: H02J 7/00, H02H 3/07

(54) **POWER ADAPTER WITH AUTOMATIC RETRY LIMITER AND METHOD OF OPERATION**

(30) Priority: 12.01.2015 US 201562102233 P; 11.01.2016 US 201614992598
(71) Applicant: Xentris Wireless, LLC, Addison, Illinois 60101 (US)
(72) Inventor: Morrow, Terrell, ELGIN, IL Illinois 60124 (US); Christy, William, St. Charles, IL Illinois 60175 (US); Loud, John, Menlo Park, CA California 94025 (US)
(74) Representative: Kransell & Wennborg KB

(57) **Abstract**

An automatic retry limiter circuit for a Power Adapter has a pulse detector coupled to a voltage regulator of the Power Adapter. A digital counter monitoring an output of the pulse detector is incremented upon detection of a pulse; a maximum pulse value of the counter operable to engage a disable latch configured to disable the voltage regulator.

## Description

### BACKGROUND

### Field of the Invention

This invention relates to Alternating Current (AC) and Direct Current (DC) Power Adapters, also referred to as power supplies, car and/or wall adapters. More particularly, the invention relates to a short circuit detection retry limiter operable to inhibit conventional Power Adapter retry circuitry from causing additional damage after detection of a short circuit in power conductors and/or electrical hardware connected to the Power Adapter.

### Description of Related Art

Power Adapters are used to provide DC electrical power for a wide range of power consuming devices, such as cellular telephones and other power consuming devices for ongoing operation of such devices and/or for re-charging batteries of these devices. Many power consuming devices have standardized power requirements, such as the 5 Volt Direct Current (VDC) power available from a Universal Serial Bus (USB) interface, enabling a single Power Adapter to be utilized to power and/or charge different devices and/or multiple devices simultaneously.

Each power consuming device may be connected to the Power Adapter via an adapter cable that may or may not have been provided by the supplier of the Power Adapter. The quality and/or condition of such adapter cables and their connectors may vary widely, as does user treatment of the adapter cables. Normal use and/or user abuse may result in unintended interconnections within the adapter cable and/or its connectors resulting in intermittent short circuits between the power conductors. Such short circuits may develop, for example, in an adapter cable as the adapter cable is repeatedly bent/flexed/stretched and internal strands of the conductors break and/or the cable insulation is compromised.

As some detectable "short circuits" are passing occurrences, for example from interconnect and/or disconnect action, instead of permanently disabling itself upon detection of a short circuit a Power Adapter may be configured to shut off for a short period and then supply a short circuit recovery test pulse to test if the short condition is still present. If the short circuit is no longer present, power delivery to the connected power consuming devices is once again energized. If a short circuit indication is again detected, the Power Adapter will wait another time interval before initiating another test current pulse.

Therefore, an object of the invention is to provide Power Adapter solutions that overcome deficiencies in the prior art.

### BRIEF DESCRIPTION OF THE DRAWINGS

The accompanying drawings, which are incorporated in and constitute a part of this specification, illustrate embodiments of the invention, where like reference numbers in the drawing figures refer to the same feature or element and may not be described in detail for every drawing figure in which they appear and, together with a general description of the invention given above, and the detailed description of the embodiments given below, serve to explain the principles of the invention.
Figure 1 is a schematic block diagram of an exemplary AC Adapter with an automatic retry limiter comprising a pulse detector, counter and silicon-controlled rectifier-type disable circuit.
Figure 2 is a schematic block diagram of an exemplary DC Adapter with an automatic retry limiter comprising a pulse detector, counter and silicon-controlled rectifier-type disable circuit.
Figure 3 is a schematic operation chart for a Power Adapter.

### DETAILED DESCRIPTION:

The initial contact between frayed conductor strands of an adapter cable is typically low resistance, whereupon the Power Adapter detects a short circuit and folds back or reduces the average current delivered to the fault as designed. However, the inventor's have recognized that, over time, a transient short circuit resulting from cable fray or the like may evolve into a more substantive resistive short which the Power Adapter may no longer detect as being a short circuit. This is especially true for higher current model Power Adapters where normal load resistances do not differ greatly from the resistance level selected to be indicative of a short circuit. Once an adapter cable or connector short circuit has transitioned into a resistive short circuit, then the Power Adapter's available power can be delivered to the fault and the fault region begins to heat, melt and/or char the cable, the connector and/or the surrounding area, potentially resulting in significant damage.

Because the short circuit recovery test current pulses of conventional Power Adapters will continue indefinitely, this may enable a short circuit, such as frayed conductors of an attached adapter cable, to further develop into a resistive short that is no longer detectable by the Power Adapter, leading to further resistive short heat generation, melting and charring, even if the Power Adapter has "short circuit detection protection".

To prevent these forms of failure, the inventors have developed a Power Adapter with an automatic retry limiter. That is, circuitry of the Power Adapter that monitors for current test pulses indicating the presence of a short circuit. Should a number of current test pulses be detected which exceeds a threshold number of test pulses, the Power Adapter is shut down until reset. Thus, the scenario of an intermittent short evolving into a hazardous resistive fault may be greatly reduced, thereby improving the safety of the Power Adapter.

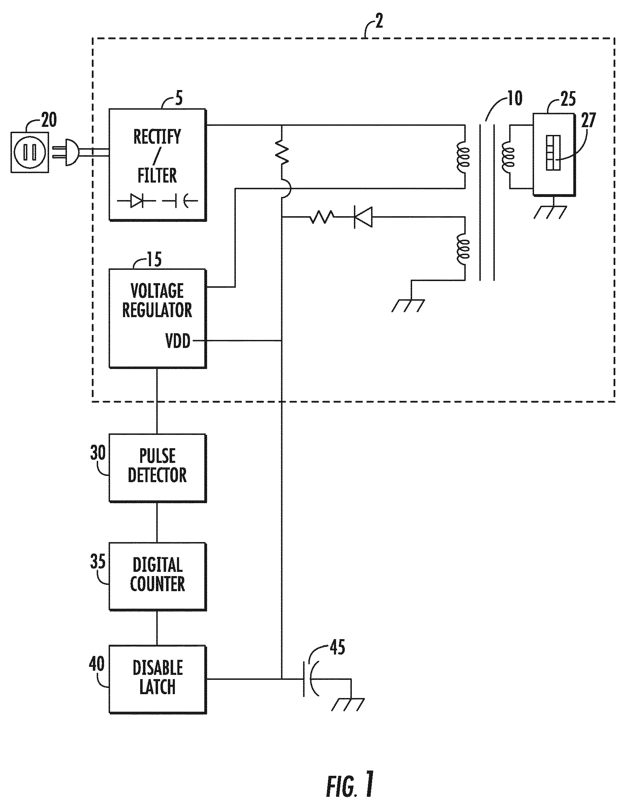

As shown in Figure 1, the power supply portion 2 of an exemplary AC Power Adapter may include rectification/filter 5, transformation 10 and voltage regulator 15 circuitry to transform the standard main AC power 20, such as 120 or 220 Volt Alternating Current @ 60 or 50 Hertz to a desired DC output 25, such as 5 VDC. The DC output 25 may be provided as, for example, a USB interface 27.

The voltage regulator 15 of the power supply portion 2 further includes current monitoring circuitry wherein if an out of range current level is detected, the voltage regulator 15 disables output voltage power delivery and shifts to a repeating test current pulse mode wherein a test pulse is generated according to a preset interval (such as one second) to determine if the short circuit is still present. If monitoring of the test pulse indicates the short circuit is no longer present, normal operation (power delivery to the connected power consuming devices) is resumed. If not, a further time interval is initiated and another current pulse generated.

The Power Adapter has over-current-event detection circuitry, such as a pulse detector 30, coupled to the voltage regulator 15, monitoring the voltage regulator 15 for current pulses. To prevent false pulse counts, the pulse detector 30 may be configured to recognize only pulses of a specific magnitude and/or duration. If a conforming current pulse is detected, a digital counter 35 coupled to the pulse detector 30 is incremented. To avoid accumulation of unrelated short circuit event re-try pulse counts, the digital counter 35 may be configured to reset to zero counts if no pulses are detected during a preset period of time.

If the digital counter 35 reaches a preset maximum pulse value a disable signal is activated by the digital counter 35 which engages a disable latch 40, for example a silicon-controlled rectifier (SCR) enabled by a pulse delivered to the gate of the SCR. Once enabled, a voltage delivered through the SCR disables the voltage regulator 15 of the power supply portion 2. Because the SCR stays engaged until current flowing through it is discontinued, once the SCR is enabled by the digital counter 35 reaching the maximum pulse value it will stay latched on, maintaining the disable signal for the voltage regulator 15, and thereby disabling the power supply portion 2 (and thus the AC Adapter) until AC power 20 is removed. A further reset delay circuit, such as a capacitor network 45 may be applied to set an off period before the current through the engaged SCR reaches a minimum value, enabling disconnection of the disable latch 40 only after a preset minimum interval of power removal (disconnection of the AC Adapter from AC power 20 and reconnection).

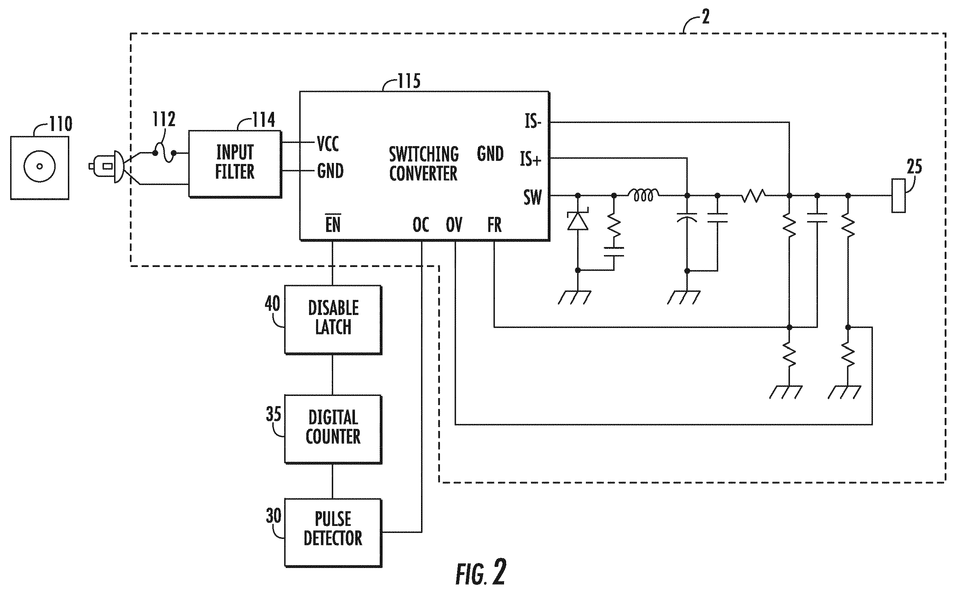

An exemplary DC Power Adapter for use, for example, with the 12 VDC power typically available in automobiles is shown in Figure 2. As the DC Input Power 110 is already DC, rectification circuitry is not necessary. In a power supply portion 2, the DC Input Power may be fused (fuse 112) and/or filtered (filter 114) before input to a voltage regulator provided as a switching converter 115. The switching converter 115 may be configured to transform the DC Input Power 110 (such as 12 VDC) to a regulated DC output 25, for example 5 VDC. The switching converter 115 further includes short circuit sensing and re-try pulse testing functionality as previously described. Similar to the AC Power Adapter of Figure 1, short circuit detection re-try pulse output of the switching converter 115 may be monitored by a pulse detector 30, for example via an output control pin and the signal from the disable latch 40 set by the digital counter 35 upon an over limit count of pulses may be coupled to the enable pin, respectively, of the switching converter 115 integrated circuit package.

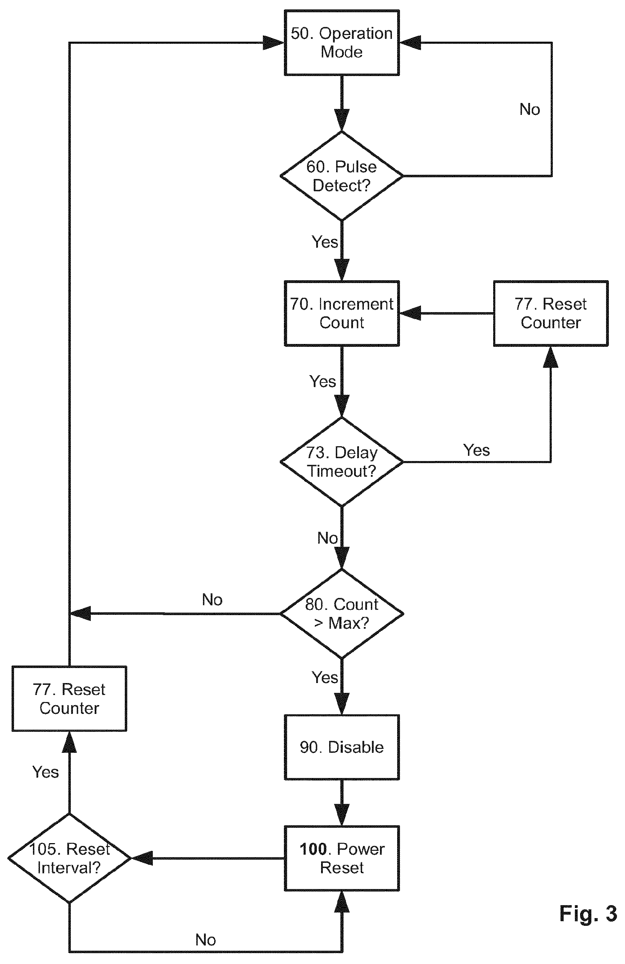

In a method of operation, as shown for example in Figure 3 and described here below with reference to the elements of the AC Power Adapter circuitry as described with respect to Figure 1, The Power Adapter has an operation mode 50 wherein the power supply portion 2 receives AC power 20 and delivers DC power to the DC output 25, regulated and monitored by the voltage regulator 15. If a short circuit is detected by the voltage regulator 15, the voltage regulator 15 shifts to a test current pulse mode and current pulse detection (pulse detect 60) and counting of each conforming pulse (increment count 70) by the automatic retry limiter proceeds. If a delay time out 73 elapses since the last pulse was detected, then the pulse count may be automatically reset (count reset 77). If the maximum pulse value of the counter is exceeded (count > max 80), the disable latch 40 is engaged and the AC Adapter is disabled (disable 90) until AC power 20 is disconnected (the AC Adapter is unplugged, power reset 100) for the interval (reset interval 105) required to disengage the disable latch 40 that may be configured, for example, via capacitor network 45, whereupon the automatic retry limiter is reset to a steady state with the counter reset to zero (another reset count 77), and returned to operation mode 50.

The method of operation similarly applies to the DC Power Adapter embodiment of Figure 2, here receiving DC Input Power 110 and outputting short circuit protected DC power at the DC output 25.

One skilled in the art will appreciate that the automatic retry limiter prevents endless short circuit test pulse generation by the voltage regulator, without inhibiting automatic recovery by the Power Adapter from momentary short circuits. It will also automatically limit power to a short circuit in the connected device such as a cellular handset or portable music device. The automatic counter reset also prevents accumulation of fault counts so as to not incorrectly attribute them to a normally functioning adapter cable or connected device.

**Table of Parts**

| | |
|---|---|
| 2 | power supply portion |
| 5 | rectification/filter |
| 10 | transformation |
| 15 | voltage regulator |
| 20 | AC Input Power |
| 25 | DC output |
| 27 | universal serial bus interface |
| 30 | pulse detector |
| 35 | digital counter |
| 40 | disable latch |
| 45 | capacitor network |
| 50 | operation mode |
| 60 | pulse detect |
| 70 | increment count |
| 73 | delay timeout |
| 77 | counter reset |
| 80 | count > max |
| 90 | disable |
| 100 | power reset |
| 105 | reset interval |
| 110 | DC Input Power |
| 112 | fuse |
| 114 | input filter |
| 115 | switching converter |

Where in the foregoing description reference has been made to materials, ratios, integers or components having known equivalents then such equivalents are herein incorporated as if individually set forth.

While the present invention has been illustrated by the description of the embodiments thereof, and while the embodiments have been described in considerable detail, it is not the intention of the applicant to restrict or in any way limit the scope of the appended claims to such detail. Additional advantages and modifications will readily appear to those skilled in the art. Therefore, the invention in its broader aspects is not limited to the specific details, representative apparatus, methods, and illustrative examples shown and described. Accordingly, departures may be made from such details without departure from the spirit or scope of applicant's general inventive concept. Further, it is to be appreciated that improvements and/or modifications may be made thereto without departing from the scope or spirit of the present invention as defined by the following claims.

## Claims

1. A power adapter, comprising:
a power supply portion regulated by a voltage regulator;
a pulse detector coupled to the voltage regulator;
a digital counter monitoring an output of the pulse detector;
a maximum pulse value of the counter operable to engage a disable latch;
the disable latch operative to disable the voltage regulator.

2. The power adapter of claim 1, wherein the pulse detector is configured to recognize pulses of the voltage regulator of a desired magnitude.

3. The power adapter of claim 1, wherein the pulse detector is configured to recognize pulses of the voltage regulator of a desired duration.

4. The power adapter of claim 1, wherein the voltage regulator is coupled to rectification and transformation circuitry which converts an alternating current voltage to a desired direct current voltage, and wherein the disable latch includes a preset reset time delay over which the alternating current voltage must be removed before the disable latch can be reset.

5. The power adapter of claim 4, wherein the preset reset time delay is provided by a capacitor network.

6. The power adapter of claim 1, wherein the disable latch is a silicon controlled rectifier.

7. The power adapter of claim 1, wherein the digital counter includes a reset operable if a maximum pulse interval between outputs of the pulse detector is exceeded.

8. A method for operation of a power adapter, comprising:
monitoring a voltage regulator of the power adapter for pulse outputs;
counting detected pulse outputs of the voltage regulator;
enabling a disable latch if the count of detected pulse outputs exceeds a preset value.

9. The method of claim 8, wherein the disable latch remains latched until a voltage provided to the power adapter is removed.

10. The method of claim 9, wherein the disable latch remains latched until a reset interval has elapsed after the voltage provided to the power adapter is removed.

11. The method of claim 8, wherein the monitoring of the voltage regulator for pulse outputs includes filtering for conforming pulses.

12. The method of claim 11, wherein the filtering for conforming pulses includes a desired magnitude of the pulses.

13. The method of claim 11, wherein the filtering for conforming pulses includes a desired interval of the pulses.

14. The method of claim 8, wherein the disable latch is a silicon-controlled rectifier-type circuit.

15. The method of claim 8, wherein the count of detected pulses is reset if no pulses occur for a period of time.
